(19) Europäisches Patentamt
European Patent Office
Office européen des brevets

(11) **EP 3 008 123 B1**

(12) **FASCICULE DE BREVET EUROPEEN**

(45) Date de publication et mention
de la délivrance du brevet:
**13.03.2019 Bulletin 2019/11**

(51) Int Cl.:
*C08J 9/40* [(2006.01)]     *E04B 1/74* [(2006.01)]
*C04B 28/00* [(2006.01)]   *C04B 38/00* [(2006.01)]
*C04B 28/24* [(2006.01)]   *B01J 13/00* [(2006.01)]
*C04B 26/12* [(2006.01)]

(21) Numéro de dépôt: **14729691.7**

(22) Date de dépôt: **13.06.2014**

(86) Numéro de dépôt international:
**PCT/EP2014/062437**

(87) Numéro de publication internationale:
**WO 2014/198931 (18.12.2014 Gazette 2014/51)**

(54) **MATERIAUX COMPOSITES ISOLANTS COMPRENANT UN AEROGEL INORGANIQUE ET UNE MOUSSE DE MELAMINE**

ISOLIERENDE VERBUNDWERKSTOFFE MIT ANORGANISCHEM AEROGEL UND EINEM MELAMINSCHAUM

INSULATING COMPOSITE MATERIALS COMPRISING AN INORGANIC AEROGEL AND A MELAMINE FOAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2013 FR 1355558**

(43) Date de publication de la demande:
**20.04.2016 Bulletin 2016/16**

(73) Titulaire: **Aspen Aerogels, Inc.**
**Northborough MA 01532 (US)**

(72) Inventeurs:
• **BONNARDEL, Pierre-Antoine**
**F-91190 Gif s/ Yvette (FR)**
• **CHAUSSON, Sophie**
**F-69100 Villeurbanne (FR)**
• **GERARDIN, Emilie**
**F-38300 Bourgoin-Jallieu (FR)**

(74) Mandataire: **Adam, Holger**
**Kraus & Weisert**
**Patentanwälte PartGmbB**
**Thomas-Wimmer-Ring 15**
**80539 München (DE)**

WO-A2-2012/113740    US-A1- 2009 029 147
US-A1- 2012 064 287    US-A1- 2012 142 802

• Axel Berge ET AL: "Chalmers Literature review of High Performance Thermal Insulation", , 1 January 2012 (2012-01-01), pages 1-28, XP55444217, Gothenburg, Sweden Retrieved from the Internet: URL:http://publications.lib.chalmers.se/records/fulltext/local_159807.pdf [retrieved on 2018-01-24]
• FÉLIX V ET AL: "A thermal porosimetry method to estimate pore size distribution in highly porous insulating materials", REVIEW OF SCIENTIFIC INSTRUMENTS, AIP, MELVILLE, NY, US, vol. 83, no. 5, 1 May 2012 (2012-05-01), pages 54903-54903, XP012162334, ISSN: 0034-6748, DOI: 10.1063/1.4704842 [retrieved on 1901-01-01]
• J. Fricke ET AL: "Optimization of monolithic silica aerogel insulants", International journal of heat and mass transfer, vol. 35, no. 9, 1 September 1992 (1992-09-01), pages 2305-2309, XP55078907, ISSN: 0017-9310, DOI: 10.1016/0017-9310(92)90073-2

(56) Documents cités:
    **EP-A2- 2 397 513**     **WO-A1-2013/053951**

• Anonymous: "Basotect G - Technical Information", BASOTECT Plastic Plus, 1 November 2006 (2006-11-01), pages 1-6, XP055452646, Germany Retrieved from the Internet: URL:http://www.indicaindustries.com/pdf/ti _basotect_g_eng.pdf [retrieved on 2018-02-20]

## Description

La présente invention concerne des matériaux composites isolants comprenant un aérogel inorganique et une mousse de mélamine, et leurs utilisations. L'économie d'énergie, et plus particulièrement l'isolation thermique, se trouvent aujourd'hui au coeur des problématiques des industriels et dans le bâtiment. L'isolation thermique est obtenue traditionnellement par l'usage de laine de verre, de roche, de polystyrène expansé ou polystyrène extrudé, souvent combinés dans des systèmes d'isolation industrielle d'une part, et pour le bâtiment d'autre part. Dans l'isolation du bâtiment ces isolants peuvent être collés sur une plaque de plâtre. La performance en isolation thermique des matériaux est mesurée par leur conductivité thermique. Plus la valeur de la conductivité thermique est basse, moins le matériau conduit la chaleur et plus l'isolation thermique est bonne. Dans la présente invention, la conductivité thermique est mesurée selon la méthode de la plaque chaude gardée de la norme NF EN 12667 à 20°C et à pression atmosphérique en date de juillet 2001. Cependant, les industriels sont à la recherche de matériaux isolants toujours plus performants et plus économiques. C'est dans ce cadre qu'ont été développés les isolants à base d'aérogels et de xérogels. Un gel comporte une structure continue tridimensionnelle poreuse. La préparation d'un gel implique une étape de transition sol-gel, c'est-à-dire le passage d'une suspension de particules solides, le sol, à un matériau gélatineux d'apparence solide, le gel. On distingue, selon la nature du fluide présent dans les pores du gel, les aérogels et xérogels (air), les hydrogels (eau), les organogels (solvant organique), en particulier les alcogels (alcool). L'ensemble des termes hydrogels, alcogels et organogels sont rassemblés sous la dénomination plus générale de lyogels.

Traditionnellement, le terme aérogel se réfère de manière générale à un gel séché dans des conditions supercritiques, c'est-à-dire que le solvant majoritaire est à l'état de fluide supercritique dans ces conditions, tandis que le terme xérogel se réfère à un gel séché dans des conditions subcritiques, c'est-à-dire que le solvant majoritaire n'est pas à l'état de fluide supercritique dans ces conditions. Aussi bien les aérogels et que les xérogels sont très intéressants non seulement pour leur qualité d'isolants thermiques et acoustiques, mais aussi pour leur faible densité. Toutefois, on englobe sous le terme « aérogel » à la fois les aérogels et les xérogels, à fins de simplification. Typiquement, les aérogels sont obtenus sous forme granulaire, ce qui pose des problèmes de transport et de manipulation. Plusieurs solutions ont donc émergé afin d'obtenir des aérogels monolithiques.

Il est en outre avantageux, notamment pour les applications dans le domaine du bâtiment, d'obtenir une épaisseur de matériau isolant par exemple supérieure à 2 cm, voire de l'ordre de 5 cm. En effet, les nouvelles normes pour l'isolation par l'intérieur des bâtiments (Réglementation Thermique 2012 Française) préconisent l'utilisation de panneaux dont la résistance thermique est de R = 3 m$^2$.K/W.

Un autre problème lié à l'utilisation des aérogels, et en particulier des aérogels granulaires, réside dans leur caractère poudrant, c'est-à-dire qu'ils libèrent des poussières, de silice dans le cas des aérogels de silice par exemple.

Une première catégorie de matériaux monolithiques permettant de surmonter une partie de ces problèmes est obtenue par ajout d'un liant à un aérogel particulaire. Les particules d'aérogels sont ainsi « collées » entre elles. En général, pour augmenter les performances thermiques du matériau utilisé, le liant utilisé est une mousse. C'est ce qui est notamment décrit dans les documents US 2012/0142802, EP 1 808 454, EP 0 340 707 et DE 195 33 564, pour lesquels le liant est une mousse de mélamine.

Le procédé de préparation de ce type de matériau composite monolithique consiste à mélanger des particules d'aérogels préformées dans un mélange de précurseurs de la mousse de mélamine, puis à procéder à une réaction de polymérisation et de formation de la mousse. Les matériaux obtenus selon un tel procédé possèdent cependant des performances d'isolation thermiques moyennes (conductivité thermique en général comprises entre 25 et 40 mW/m.K). En particulier, le document US 2012/0142802 enseigne l'emploi d'une mousse présentant une taille de pore comprise entre 10 et 1000 $\mu$m et d'un aérogel avec une taille de pore inférieure à 50 nm et une porosité comprise entre 50 et 99% comme matériaux de départ. Or, bien que le document US 2012/0142802 indique que les matériaux composites obtenus ont une conductivité thermique comprise entre 10 et 100 mK/m.K, de préférence entre 15 et 40 mK/m.K (voir [00139]), celui-ci enseigne uniquement des matériaux composites de conductivité thermique supérieure à 22 mK/m.K (voir exemples 1 et 5), et ce indépendamment de la teneur du matériau en aérogel (respectivement 62% pour l'exemple 1 et 94% pour l'exemple 5). En outre, le document US 2012/0142802 ne précise pas la macroporosité des matériaux composites obtenus. Les documents EP 1 808 454, EP 0 340 707 et DE 195 33 564 ne précisent pas non plus ces caractéristiques. La demande de brevet US 2012/0064287 enseigne des matériaux composites monolithiques comprenant un support comprenant un copolymère mélamine-formaldéhyde avec une pluralité de micro-ouvertures, et une matrice d'aérogel disposée dans les micro-ouvertures (voir abrégé et [0010]). La matrice d'aérogel peut être constituée d'un aérogel organique tel qu'un aérogel d'acrylamide, de benzoxazine, de bismaléimide, d'alcool arylique, de cellulose, de benzaldéhyde substitué par un hydroxy, ou un aérogel inorganique, par exemple de silice, ou une combinaison de ceux-ci (voir [0011] et [0156]). La demande US 2012/0064287 s'étend longuement sur les matrices d'aérogels organiques, envisageant plusieurs formules générales pour les précurseurs d'aérogels organiques cités. Cependant, elle ne fournit aucune précision sur leur structure, en particulier concernant leur macroporosité. En outre, aucun exemple n'a trait à un matériau composite comprenant un aérogel inorganique. Parallèlement, les documents US 2007/0259979, US 2009/0029147 et US 6,040,375 décrivent des matériaux composites comprenant une mousse à cellules ouvertes, notamment une mousse de polyuréthane, combinée à un aérogel de silice, obtenus par coulage d'un sol de silice sur un panneau de mousse de polyuréthane préformé, suivi d'une gélification, et d'un séchage. Les matériaux obtenus présentent une conductivité thermique comprise entre 18 et 22 mW/m.K. Le document US 2009/0029147 semble enseigner que l'aérogel obtenu présente une porosité d'au moins 95%. Les autres documents ne semblent pas caractériser le diamètre de pores ni la porosité des matériaux.

Ainsi, l'homme du métier n'est pas enclin à concevoir un matériau composite à base d'aérogel et de mousse de mélamine, puisque ceux-ci, d'après les divulgations de l'art antérieur, semblent peu efficaces en termes d'isolation thermique, notamment comparés à d'autres matériaux à base de mousse de polyuréthane. Il en est d'autant plus dissuadé que la conductivité thermique des mousses de mélamine, notamment les mousses BASOTECT® commercialisées par BASF, est d'environ 35 mW/m.K, tandis que la conductivité thermique des mousses de polyuréthane à cellules ouvertes est en général comprise entre 20 et 25 mW/m.K.

De manière surprenante, le demandeur a fabriqué des matériaux composites isolants comprenant un aérogel inorganique et une mousse de mélamine à cellules ouvertes présentant de bonnes performances d'isolation thermique, tout en étant facile à manipuler, et en diminuant très fortement, voire en éliminant, leur caractère poudrant. Dans ces matériaux composites, la mousse ne joue pas le rôle de liant.

Au sens de la présente invention, on englobe sous le terme « aérogel » à la fois les aérogels et les xérogels.

Par « matériau composite », on entend au sens de la présente invention un matériau comprenant au moins deux composés non miscibles intimement liés entre eux. Le matériau composite possède alors des propriétés, notamment physiques (par exemple conductivité thermique, rigidité etc...) que chacun des matériaux pris séparément ne possède pas nécessairement.

Par « monolithique », on entend au sens de la présente invention que le matériau ou l'aérogel est solide et se présente sous forme d'un bloc d'un seul tenant, notamment sous forme d'un panneau. Un le matériau ou aérogel monolithique peut être aussi bien rigide que flexible. Par « rigide » on entend que le matériau ne peut être déformé de manière significative sans observer la formation de fissures, voire la rupture du matériau monolithique. Notamment, cela signifie que le matériau monolithique ne peut être roulé. Par « flexible », on entend au contraire que le matériau peut être déformé, et notamment enroulé. On pourra employer également, pour qualifier le matériau monolithique, le terme « autoportant », qui sera entendu comme signifiant que la stabilité du produit n'est pas due à un support extérieur. Un matériau monolithique autoportant peut être aussi bien flexible que rigide.

Par « mousse », on entend au sens de la présente invention une substance, notamment un polymère, emprisonnant des bulles de gaz en son sein. Les mousses se distinguent en « mousses à cellules fermées », c'est-à-dire que les poches de gaz sont totalement enrobées de matériau solide, par opposition aux « mousses à cellules ouvertes », dans lesquelles les poches de gaz communiquent entre elles. Par exemple, les mousses commercialisées sous le nom de BASOTECT® sont des mousses à cellules ouvertes.

Par « mousse de mélamine », on entend au sens de la présente invention une mousse comprenant un polymère dont un des monomères est la mélamine. Un exemple de mousse de mélamine est un mousse mélamine-formaldéhyde, issue d'une réaction de polymérisation entre la mélamine et le formaldéhyde.

Par « macropore », on entend au sens de la présente invention les pores présentant un diamètre supérieur à 10 $\mu$m.

Par « nombre total de macropore », on entend donc au sens de la présente invention le nombre total de pores présentant un diamètre supérieur à 10 $\mu$m.

Par « macroporosité » d'un matériau poreux, on entend au sens de la présente invention le rapport du volume occupé par les macropores sur le volume occupé par le matériau dans sa totalité. La macroporosité est exprimée en pourcentage (%) et est mesurée par tomographie aux rayons X et en trois dimensions. De préférence, les acquisitions sont réalisées avec le modèle de machine DeskTom muni d'un générateur de 130 kV. La distance foyer/échantillon est d'environ 12 cm. Le logiciel utilisé pour l'acquisition et la reconstruction des données est le logiciel X-Act développé par RX Solutions. Pour les post-traitements (visualisation et analyse de porosité), le logiciel VG Studio Max version 2.2 a été utilisé. L'homme du métier effectue le paramétrage des traitements selon ses connaissances générales.

Dans le cadre de la présente invention, on définit également le « diamètre» des pores d'un matériau poreux, qui est déterminé par une extrapolation statistique à partir de la répartition des volumes des macropores du matériau poreux, mesurée par exemple par tomographie aux rayons X et en trois dimensions. Il est considéré qu'un pore a une forme de sphère. La relation liant le diamètre des macropores et le volume de ce dernier est donc la

suivante : $V = \dfrac{\pi \times D^3}{6}$ avec V le volume et D le diamètre de la sphère. Un exemple de détermination du diamètre des pores d'un matériau selon l'invention est présenté dans l'exemple 1.

Sans vouloir se limiter à cette interprétation, il semble que les propriétés du matériau composite selon l'invention, et notamment la faible conductivité thermique, sont intrinsèquement liées à la macroporosité du matériau. Ainsi, les performances thermiques remarquables des matériaux selon l'invention sont le résultat du contrôle de la macroporosité du matériau, et/ou du diamètre des macropores.

La présence de macropores génère une contribution en conductivité par convection gazeuse non négligeable sur la conductivité thermique globale. La minimisation de la proportion volumique des macropores par rapport au volume de l'échantillon permet d'obtenir des performances thermiques remarquables.

En effet, comme le quantifie le formalisme de Knüdsen, la conductivité thermique de l'air en fonction de la dimension caractéristique de confinement (i.e. taille de pore),

$\lambda_{g\delta}$, augmente selon la loi suivante : $\lambda_{g\delta} = \dfrac{\lambda_0}{1 + \alpha K_n}$

avec $\lambda_0$ la conductivité du gaz libre (i.e. non confiné), $\alpha$ le coefficient d'accommodation entre le gaz et le solide (coefficient traduisant la qualité de l'échange thermique entre le gaz et les parois de confinement), $K_n$, le facteur de Knüdsen, défini comme le rapport entre le libre parcours moyen du gaz et la dimension caractéristique de confinement (i.e. la dimension des pores).

Ainsi, au-dessus d'une taille de macropore de 10 $\mu$m, l'air n'est plus confiné, ce qui influence négativement les propriétés de conductivité thermique.

Un objet de la présente invention concerne donc un matériau composite monolithique comprenant un aérogel inorganique renforcé par une mousse de mélamine à cellules ouvertes préformée, ledit matériau présentant une conductivité thermique $\lambda$ comprise entre 10 et 20 mW/m.K mesurée selon la méthode de la plaque chaude gardée de la norme NF EN 12667 à 20°C et à pression atmosphérique, caractérisé en ce que le pourcentage du volume occupé par des macropores, les macropores étant des pores présentant un diamètre supérieur à 10 $\mu$m par rapport au volume occupé par le matériau dans sa totalité est inférieure à 5%, de préférence inférieure à 2%, mesuré par tomographie aux rayons X et en trois dimensions, le matériau ne comprend pas de liant, et caractérisé en ce que le matériau est obtenu par un procédé comprenant les étapes successives suivantes :

a) coulage d'un sol inorganique dans un réacteur, dans lequel a été placé au préalable la mousse de mélamine à cellules ouvertes préformée, ledit sol comprenant entre 6 et 15% en poids, de matériau inorganique par rapport au poids total du sol inorganique,

b) gélification du sol en un lyogel,

c) séchage du lyogel.

Au sens de la présente invention, l'ensemble des termes hydrogels, alcogels et organogels sont rassemblés sous la dénomination plus générale de lyogels.

Un autre objet de l'invention concerne un panneau multicouche comprenant au moins une couche essentiellement constituée d'un matériau composite selon l'invention.

Un autre objet de l'invention concerne l'utilisation du matériau composite monolithique comprenant un aérogel inorganique et une mousse de mélamine à cellules ouvertes ou un panneau multicouche selon l'invention, en tant qu'isolant thermique ou acoustique.

Matériau composite

La présente invention a trait à un matériau composite monolithique comprenant un aérogel inorganique renforcé par une mousse de mélamine à cellules ouvertes préformée, ledit matériau présentant une conductivité thermique $\lambda$ comprise entre 10 et 20 mW/m.K, avantageusement comprise entre 10 et 15 mW/m.K, mesurée selon la méthode de la plaque chaude gardée de la norme NF EN 12667 à 20°C et à pression atmosphérique, caractérisé en ce que le pourcentage du volume occupé par des macropores, les macropores étant des pores présentant un diamètre supérieur à 10 $\mu$m par rapport au volume occupé par le matériau dans sa totalité est inférieure à 5%, de préférence inférieure à 2%, mesuré par tomographie aux rayons X et en trois dimensions, le matériau ne comprend pas de liant, et caractérisé en ce que le matériau est obtenu par un procédé comprenant les étapes successives suivantes :

a) coulage d'un sol inorganique dans un réacteur, dans lequel a été placé au préalable la mousse de mélamine à cellules ouvertes préformée, ledit sol comprenant entre 6 et 15% en poids, de matériau inorganique par rapport au poids total du sol inorganique,

b) gélification du sol en un lyogel,

c) séchage du lyogel.

Par « essentiellement constitué de », on entend au sens de la présente invention que le matériau peut comprendre d'autres éléments que ceux cités, mais en quantités suffisamment faibles pour qu'ils ne modifient pas les caractéristiques essentielles du matériau. Ainsi, le matériau peut comprendre des impuretés, notamment à l'état de traces.

Le matériau composite monolithique selon l'invention est monocouche. On observe également qu'il est homogène, notamment en termes de structure, de conductivité thermique, de macroporosité et de flexibilité.

La mousse de mélamine permet d'améliorer certaines propriétés mécaniques de l'aérogel, tout en conservant une conductivité thermique inférieure à 20 mW/m.K mesurée selon la méthode de la plaque chaude gardée de la norme NF EN 12667 à 20°C et à pression atmosphérique. Par exemple, la contrainte maximale en phase élastique des matériaux composites et beaucoup plus importante de celle de l'aérogel correspondant non renforcé. Les valeurs typiques sont respectivement de 3.5 MPa (pour le matériau composite) et $1.10^{-4}$ MPa (pour l'aérogel non renforcé correspondant).

Par « mousse préformée », on entend au sens de la présente invention que la mousse de mélamine à cellules ouvertes ne subit plus de réaction chimique modifiant la structure du polymère comprenant la mélamine, notamment de réaction chimique de polymérisation ou de réticulation. En outre, la macroporosité de la mousse n'est pas modifiée par une réaction physique. La seule transformation que subit la mousse consiste en la formation du gel à l'intérieur de ses cellules ouvertes. La forme du matériau composite obtenu sera donc essentiellement identique à celle de la mousse préformée de départ.

La conductivité thermique mesurée selon la méthode de la plaque chaude gardée de la norme NF EN 12667 à 20°C et à pression atmosphérique est comprise entre 10 et 20 mW/m.K, avantageusement comprise entre 10 et 15 mW/m.K.

On constate expérimentalement que le matériau selon l'invention possède des pores dont le diamètre est compris entre 50 et 250 $\mu$m. De préférence, les macropores dont le diamètre est compris entre 50 et 250 microns représentent plus de 80 % (en nombre) du nombre total de macropores (pores dont le diamètre est supérieur ou égal à 10 $\mu$m) du matériau selon l'invention.

De préférence, la mousse de mélamine à cellules ouvertes est une mousse de mélamine-formaldéhyde. A titre d'exemple, on peut citer les mousses BASOTECT® commercialisées par BASF. Dans un mode de réalisation particulier, la mousse de mélamine formaldéhyde possède une épaisseur comprise entre 2 et 50 mm, une porosité comprise entre 95% et 99.5%, une densité comprise entre 8.5 et 11.5 kg.m$^{-3}$ et une conductivité thermique comprise entre 35 et 40 mW/m.K mesurée selon la méthode de la plaque chaude gardée de la norme NF EN 12667 à 20°C et à pression atmosphérique.

La mousse de mélamine permet de structurer l'aérogel pour améliorer ses propriétés de résistance mécanique et de tenue tout en conservant ses propriétés d'isolation thermique.

Avantageusement, le matériau composite selon l'invention possède une densité comprise entre 70 kg.m$^{-3}$ et 150 kg.m$^{-3}$, de préférence entre 100 et 120 kg.m$^{-3}$.

De préférence, le matériau composite selon l'invention comprend entre 85% et 98% en poids d'aérogel par rapport au poids du matériau composite, de préférence entre 90% et 95%, entre 92% et 98% ou entre 92 et 95% en poids d'aérogel par rapport au poids total du matériau composite.

Avantageusement, l'aérogel inorganique est choisi parmi les aérogels de silice, d'oxyde de titane, d'oxyde de manganèse, d'oxyde de calcium, de carbonate de calcium, d'oxyde de zirconium, ou leurs mélanges, de préférence parmi les aérogels de silice.

Dans un mode de réalisation avantageux, le matériau composite selon l'invention présente une épaisseur comprise entre 2 et 50 mm, de préférence entre 5 et 30 mm, par exemple entre 10 et 20 mm. On observe que l'épaisseur du matériau composite monolithique est corrélée à l'épaisseur de la mousse de mélamine utilisée. Ainsi, la mousse de mélamine présente avantageusement une épaisseur comprise entre 2 et 50 mm, de préférence entre 5 et 30 mm, par exemple entre 10 et 20 mm.

L'aérogel peut en outre comprendre un additif. Avantageusement, l'additif vise à améliorer les propriétés mécaniques, de cohésion ou de conductivité thermique des matériaux composites monolithiques selon l'invention. De préférence, cet additif comprend un opacifiant. Ainsi, avantageusement, le matériau selon l'invention comprend en outre un opacifiant. L'utilisation d'un opacifiant permet en effet de diminuer la valeur de la conductivité thermique en diminuant sa composante radiative. Typiquement, l'opacifiant est choisi parmi SiC, $TiO_2$, noir de carbone, graphite, $ZrO_2$, ZnO, $SnO_2$, MnO, NiO, TiC, WC, $ZrSiO_4$, $Fe_2O_3$, $Fe_3O_4$, $FeTiO_3$. En particulier, l'opacifiant est choisi parmi le groupe constitué de SiC et $TiO_2$.

Le matériau composite selon l'invention ne comprend pas de liant. On peut citer comme exemple de liant inorganique les ciments, les plâtres, le gypse, la chaux, et comme exemple de liant organique des thermoplastiques tels que les cires polyoléfines, les polymères de styrène, les polyamides. Le terme liant comprend également les adhésifs, tels que les résines époxy et les cyanoacrylates par exemple.

Dans un mode de réalisation préféré, le matériau composite selon l'invention ne comprend pas de matériau de renforcement fibreux. Au sens de la présente invention, un « matériau de renforcement fibreux » comprend des fibres ou une nappe fibreuse non tissée, ou un mélange de celles-ci. Les divers types de fibres adaptées à la fabrication d'isolants thermiques sont connus de l'homme du métier. On citera par exemple les fibres de verre, les fibres minérales, les fibres de polyester, les fibres d'aramide, les fibres de nylon et les fibres végétales, ou un mélange de celles-ci, comme décrit dans le brevet US 6,887,563.

Avantageusement, le matériau composite selon l'invention est hydrophobe, perméable à la vapeur et tient en température jusqu'à 250°C. Il se découpe facilement et ne poudre quasiment pas par rapport aux autres matériaux composites à base d'aérogel de silice. En outre, les matériaux composites selon l'invention sont légers et flexibles. Ils présentent aussi de bonnes propriétés d'isolation acoustique. Les matériaux selon l'invention présentent de bonnes propriétés de résistance au feu, ils sont de préférence classés au moins B1 selon la norme allemande DIN 4102-1, M1 en France selon la norme NF P-92507, ou V0 aux Etats-Unis selon la norme UL94. L'énergie de combustion ou pouvoir calorifique supérieur du matériau composite selon l'invention mesuré selon la norme NF EN ISO 1716 est avantageusement plus faible que la plupart des matériaux isolants de performance, tels que le polyuréthane.

Le matériau selon l'invention est susceptible d'être obtenu par le procédé comprenant les étapes successives suivantes :

a) coulage d'un sol inorganique dans un réacteur, dans lequel a été placé au préalable une mousse de mélamine à cellules ouvertes préformée, ledit sol comprenant entre 6 et 15% en poids, de matériau inorganique par rapport au poids total du sol,

b) gélification du sol en un lyogel,

c) un séchage dans des conditions subcritiques du lyogel.

Le procédé d'obtention du matériau est décrit plus précisément dans la suite.

Dans la présente invention, la quantité résiduelle de solvant en poids du matériau composite monolithique est calculée selon la norme EN/ISO 3251. Le protocole utilisé consiste à prélever 1 g de aérogel selon l'invention, le peser, puis de le sécher pendant 3h dans une étuve à 105°C, puis de peser l'aérogel ainsi séché.

Le matériau composite selon l'invention possède typiquement une quantité résiduelle de solvant en poids du matériau composite inférieure ou égale à 3%, de préférence inférieure à 1%, selon la norme EN/ISO 3251.

Panneaux multicouches

La présente invention concerne également des panneaux multicouches, plus particulièrement sous forme de panneaux multicouches laminés ou sandwichs, comprenant au moins une couche essentiellement constituée d'un matériau composite monolithique selon l'invention, éventuellement en association avec des couches de nature différente. Dans le panneau multicouche selon l'invention, chaque couche est constituée d'un matériau monolithique ou d'un panneau collé à une ou plusieurs autres couches.

A titre d'exemple, une ou plusieurs plaques de plâtre (éventuellement de type BA13) peuvent être collées d'un ou de chaque côté d'un matériau composite monolithique selon l'invention pour former un complexe de doublage. On envisage également des panneaux multicouches mixtes comprenant une association d'un ou plusieurs matériaux composites selon l'invention et d'un matériau composite tel que décrit par exemple dans la demande internationale WO 2013/053951.

Le matériau composite selon la présente invention confère au panneau multicouche ainsi obtenu des caractéristiques améliorées ou adaptées à un cas d'application particulière. Par exemple, un matériau composite monolithique selon l'invention contrecollé à un panneau isolant rigide selon la demande WO 2013/053951 apporte une élasticité en compression ou un amortissement acoustique dont ces derniers sont souvent relativement moins bien pourvus. La couche constituée du matériau composite monolithique selon l'invention peut aussi jouer le rôle de pare-feu ou de retardant de flamme ou de couche d'isolation haute température par rapport au matériau auquel elle est associée.

Le contrecollage d'une couche de matériau composite entre deux couches thermoformables peut conférer au panneau multicouche une capacité à être lui-même thermoformé.

Procédé d'obtention

La présente invention décrit un procédé d'obtention d'un matériau composite monolithique comprenant un aérogel inorganique renforcé par une mousse de mélamine à cellules ouvertes préformée, présentant une conductivité thermique $\lambda$ comprise entre 10 et 20 mW/m.K mesurée selon la méthode de la plaque chaude gardée de la norme NF EN 12667 à 20°C et à pression atmosphérique, caractérisé en ce que le pourcentage du volume occupé par des macropores, les macropores étant des pores présentant un diamètre supérieur à 10 $\mu$m, par rapport au volume occupé par le matériau dans sa totalité est inférieur à 5%, mesuré par tomographie aux rayons X et en trois dimensions, le matériau ne comprend pas de liant, comprenant les étapes successives suivantes :

a) coulage d'un sol inorganique dans un réacteur, dans lequel a été placé au préalable la mousse de mélamine à cellules ouvertes préformée, ledit sol comprenant entre 6 et 15% en poids, de matériau inorganique par rapport au poids total du sol,

b) gélification du sol en un lyogel,

c) séchage du lyogel.

Le séchage à l'étape c) est de préférence réalisé de manière que l'aérogel obtenu présente une quantité résiduelle de solvant en poids du matériau composite inférieure ou égale à 3%, de préférence 1%, selon la norme EN/ISO 3251. Avantageusement, le séchage de l'étape c) a lieu dans des conditions subcritiques.

Avantageusement, aucun liant, notamment tel que défini précédemment, n'est utilisé ou ajouté à aucune étape du procédé selon l'invention. En outre, aucun matériau de renforcement fibreux tel que défini précédemment n'est de préférence employé dans le procédé décrit ici.

De préférence, le sol utilisé à l'étape a) est choisi parmi le groupe des sols de silice, d'oxyde de titane, d'oxyde de manganèse, d'oxyde de calcium, de carbonate de calcium, d'oxyde de zirconium, ou leurs mélanges. De préférence, le sol est un sol de silice. Ainsi, l'étape a) comprend de préférence le coulage d'un sol de silice dans un réacteur, dans lequel a été placée au préalable une mousse de mélamine à cellules ouvertes préformée, ledit sol comprenant entre 6 et 15% en poids, de silice par rapport au poids total du sol. De manière encore préférée, le sol de silice comprend entre 6 et 10% en poids de silice par rapport au poids total du sol.

Un additif peut être ajouté au sol à l'étape a), de préférence un additif comprenant un opacifiant. L'additif et l'opacifiant sont tels que définis précédemment.

Le sol utilisé à l'étape a) est par exemple obtenu par catalyse acide ou basique d'un précurseur de silice en présence d'un catalyseur. La transformation du sol de silice en lyogel (gélification, étape b) est mise en oeuvre de préférence en présence d'un catalyseur de gélification, notamment l'ammoniaque. Avantageusement, le catalyseur est utilisé à une concentration comprise entre 1 et 3%, de préférence entre 2 et 2.5% en poids par rapport au poids total des constituants de départ du sol, i.e. notamment le solvant, le précurseur de silice et les éventuels additifs.

Le lyogel obtenu à l'étape b) comprend de préférence de 70 à 90% de solvant en poids, préférentiellement de 75% à 85% de solvant en poids, par rapport au poids de sol de départ. De manière encore préférée, le lyogel obtenu à l'étape b) comprend de préférence de 85 à 94% de solvant en poids, préférentiellement de 90% à 94% de solvant en poids, par rapport au poids de sol de départ. L'homme du métier saura adapter les conditions réactionnelles de l'étape b) de gélification, et en particulier le temps de gélification, de manière à obtenir une imprégnation uniforme de la mousse préformée par le gel de silice, garantissant l'obtention d'une macroporosité inférieure à 5% permettant l'obtention d'une conductivité thermique λ comprise entre 10 et 20 mW/m.K mesurée selon la méthode de la plaque chaude gardée de la norme NF EN 12667 à 20°C et à pression atmosphérique.

Modes de réalisation particuliers : étape b)

Dans un mode de réalisation, le lyogel est un alcogel. Dans ce cas, le solvant est de préférence l'éthanol. Dans ce mode de réalisation, l'étape b) est avantageusement suivie d'une étape b2) de vieillissement de l'alcogel suivie d'une étape b3) de traitement d'hydrophobisation de l'alcogel, à l'issue duquel est obtenu un alcogel hydrophobé. L'étape b2) comprend par exemple la mise en contact de l'alcogel obtenu à l'étape b1) avec un agent hydrophobant en milieu acide de pH compris entre 1 et 3. Avantageusement, l'agent hydrophobant utilisé est choisi parmi le groupe des organosiloxanes, des organochlorosilanes ou des organoalkoxysilanes, de manière plus avantageuse, l'agent hydrophobant utilisé est choisi parmi le groupe constitué de l'hexaméthyldisiloxane (HMDSO), le triméthylchlorosilane et le triméthyléthoxysilane, de manière encore plus avantageuse l'hexaméthyldisiloxane (HMDSO). En outre, dans ce mode de réalisation, le sol de silice selon l'invention est de préférence obtenu par hydrolyse contrôlée de tétraéthoxysilane dans l'éthanol. Avantageusement, l'éthanol généré lors de l'hydrolyse est recyclé puis réutilisé comme solvant de cette même étape. De préférence, l'étape b3) comprend la mise en contact de l'alcogel obtenu à l'étape c) avec un agent hydrophobant en milieu acide de pH compris entre 1 et 3.

Avantageusement, l'alcogel est acidifié lors de l'étape b3) par addition d'un acide minéral ou organique. De manière plus avantageuse, l'acide minéral est l'acide chlorhydrique et l'acide organique est l'acide trifluoroacétique. De manière encore plus avantageuse, l'acide est l'acide trifluoroacétique ou l'acide chlorhydrique et l'agent hydrophobant l'hexaméthyldisiloxane (HMDSO). Avantageusement, l'étape b3) est conduite à une température comprise entre 50°C et 150°C. Encore plus avantageusement, l'étape b3) est conduite à la température d'ébullition de l'alcool (solvant de l'alcogel). Dans le cas où le solvant est l'éthanol, l'étape b3) est conduite au reflux de l'éthanol.

Dans un autre mode de réalisation, le lyogel obtenu à l'issue de l'étape a) est un hydrogel. Dans ce cas, l'étape b) est avantageusement suivie d'une étape b2) d'échange du solvant (l'eau) par un solvant organique tel l'acétone, l'hexane ou l'heptane menant à la formation d'un lyogel, étape optionnellement précédée d'une étape de vieillissement de l'hydrogel, et suivie d'une étape b3) de traitement d'hydrophobisation du lyogel, à l'issue duquel est obtenu un lyogel hydrophobé. Les conditions de mise en oeuvre de l'étape b3) de traitement d'hydrophobisation du lyogel sont similaires à celles décrites précédemment dans la cas où le lyogel est un hydrogel (notamment température, réactifs, etc) au solvant près.

Dans ces deux modes de réalisation, l'étape de vieillissement permet d'améliorer les propriétés mécaniques du lyogel sous l'effet des mécanismes de synérèse (séparation du liquide et du gel). Cette étape de vieillissement a avantageusement une durée inférieure à 24h. Les conditions de température et de durée du vieillissement seront choisies de manière adéquate selon des critères bien connus de l'homme du métier tels que la composition du gel par exemple. Avantageusement, l'étape de vieillissement est conduite à une température comprise entre 40°C et 80°C, encore plus avantageusement à une température comprise entre 45°C et 60°C. Avantageusement, l'étape de vieillissement a une durée inférieure à 20h.

Dans ces deux modes de réalisation, le traitement hydrophobant à l'étape b3) du procédé permet notamment de diminuer la reprise hydrique du matériau composite. Le matériau composite selon l'invention présente préférentiellement un taux de reprise hydrique à température ambiante et à 75% d'humidité relative inférieur à 5%, encore plus préférentiellement inférieur à 3%, et préférentiellement un taux de reprise hydrique à température ambiante et à 95% inférieur à 10%, encore plus préférentiellement inférieur à 5%.

Modes de réalisation particuliers : étape c)

Dans un mode de réalisation, l'étape c) se subdivise en une étape c1) de préséchage dans des conditions subcritiques à une température inférieure à 80°C, et une étape c2) de séchage dans des conditions subcritiques, ledit séchage c2) étant de type diélectrique ou convectif, à une température supérieure à 100°C lorsque ledit séchage c2) est de type convectif.

Dans un mode de réalisation, l'étape c2) est un séchage de type convectif, réalisé à une température comprise entre 120°C et 180°C, de préférence comprise entre 140°C et 160°C, encore plus préférentiellement égale à 150°C. Le séchage convectif peut être conduit en mode naturel, mais est de préférence conduit en mode forcé.

Dans un autre mode de réalisation, l'étape c2) est une étape de séchage diélectrique par micro-ondes.

De préférence, le pré-séchage c1) est poursuivi jusqu'à l'obtention d'un lyogel condensé ayant perdu entre 10 et 80% d'alcool en poids, avantageusement entre 20% et 60% d'alcool en poids, encore plus avantageusement entre 40% et 50% d'alcool en poids par rapport au poids des produits de départ.

Avantageusement, la température du pré-séchage de l'étape c1) est comprise entre 40°C et 80°C, encore plus avantageusement comprise entre 60°C et 80°C, encore plus avantageusement est égale à 80°C.

Dans un mode de réalisation préféré de l'invention, l'étape c1) est réalisée par circulation d'un flux gazeux chaud dans le réacteur. Le flux gazeux est typiquement un flux de gaz inerte tel que l'azote, l'air, ou un gaz rare. Avantageusement, le flux gazeux chaud circule verticalement, encore plus avantageusement du haut vers le bas.

Dans un autre mode de réalisation, le pré-séchage à l'étape c1) est conduit sous pression réduite. Un tel mode de réalisation est avantageux car il permet, à température égale, d'obtenir des temps de pré-séchage plus courts.

Avantageusement, l'étape c2) est réalisée par séchage convectif par circulation d'un flux d'air chaud dans le sécheur. A l'échelle du laboratoire, le séchage convectif est réalisé de préférence en étuve à une température de 150°C.

Dans un autre mode de réalisation, l'étape c2) est réalisée par séchage diélectrique par micro-ondes. De préférence, la puissance fournie lors de cette étape de séchage par microondes comprise entre 0.3 kW et 3 kW par kg de de lyogel condensé de départ, de préférence comprise entre 0.5 kW et 2 kW par kg de lyogel condensé de départ, encore préférentiellement égale à 1 kW par kg de lyogel condensé de départ. Ladite puissance est ajustée au cours du séchage de manière que la température de surface du matériau soit comprise entre 40°C et 400°C, plus préférentiellement entre 40°C et 200°C, encore plus préférentiellement entre 50°C et 150°C.

La masse de solvant perdue lors de l'étape c) ou c1) est mesurée différemment selon l'échelle du procédé. A l'échelle du laboratoire, on mesure cette quantité par pesée du lyogel obtenu après l'étape b) avant et après séchage dans les conditions de l'étape c) ou c1). A l'échelle industrielle, le solvant évaporé lors de l'étape de séchage c) ou c1) est condensé dans un autre réacteur, puis pesé.

Mode de réalisation particulier : nature du réacteur

Avantageusement, au moins les étapes a), b) et c1) sont mises en oeuvre dans au moins un réacteur, une distance caractéristique dudit réacteur entre deux parois internes au moins étant comprise entre 2 mm et 50 mm, préférablement entre 5 à 30 mm. Cette caractéristique du réacteur permet d'améliorer la diffusion des réactifs au coeur du matériau composite, de manière que la composition du matériau composite soit homogène.

Par « paroi interne du réacteur» on entend au sens de la présente invention la paroi qui est directement en contact avec les réactifs. Par exemple, dans le cas d'un réacteur double enveloppe, il s'agit de la paroi de l'enveloppe interne directement en contact avec les réactifs. Par « distance caractéristique entre deux parois internes», on entend au sens de la présente invention la distance maximale entre deux parois internes parallèles entre elles ou entre la surface tangente à une de ces parois et une paroi parallèle à celle-ci ou entre deux surfaces tangentes à la paroi. Par exemple, dans le cas d'un réacteur cylindrique, les distances caractéristiques entre deux parois internes du réacteur sont le diamètre interne et la hauteur interne du réacteur. Dans le cas d'un réacteur cubique, la distance caractéristique entre deux parois internes du réacteur est le côté interne du cube. Dans le cas d'un réacteur parallélépipédique, les distances caractéristiques entre deux parois internes du réacteur sont la hauteur interne, la longueur interne et la largeur interne. De préférence, la distance caractéristique entre deux parois internes est choisie parmi la hauteur, la largeur, la longueur, l'épaisseur et le diamètre internes.

Du fait de la géométrie particulière du réacteur, la distance de tout point à l'intérieur du réacteur à la paroi interne dudit réacteur est telle que la diffusion des réactifs dans le lyogel est optimale. De plus, un tel réacteur permet également d'optimiser les conditions de pré-séchage du lyogel lors de l'étape c1), si celle-ci est conduite dans un tel réacteur.

Ainsi, les étapes a), b) et c1) sont avantageusement réalisées dans un premier réacteur, puis le lyogel condensé est démoulé et transféré dans un sécheur convectif ou diélectrique où est effectuée l'étape c2).

Par « sécheur », on entend au sens de la présente invention un réacteur destiné à la mise en oeuvre d'une étape de séchage.

Utilisations

La présente invention concerne également l'utilisation d'un matériau composite ou d'un panneau multicouche selon l'invention, en tant qu'isolant thermique, notamment pour des applications dans la construction de bâtiments ou dans l'isolation de systèmes ou procédés industriels. Ainsi, Les matériaux composites ou panneaux multicouches selon l'invention sont avantageusement utilisés pour la fabrication de matériaux de construction, notamment des murs et cloisons, mais également des parquets ou plafonds ou pour l'isolation des tuyauteries industrielles.

Les panneaux multicouches et les matériaux composites selon la présente invention peuvent également être utilisés en tant qu'isolants acoustiques.

DESRIPTION DES FIGURES

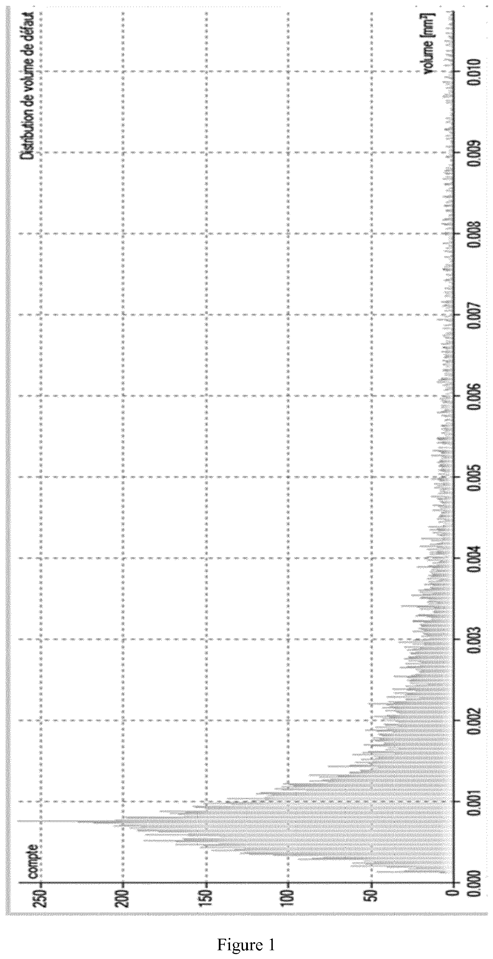

Fig. 1 : Répartition du volume des macropores mesurée par tomographie par rayons X en 3 dimensions sur le matériau composite obtenu dans l'exemple 1. L'axe des abscisses représente le volume en $mm^3$ (sur une échelle de 0 à 0,01 mm3) et l'axe des ordonnées représente le nombre de macropores (sur une échelle graduée de 0 à 250). On constate que le volume moyen des pores ($V_{moyen}$) est dans la plus grande majorité compris entre $1.10^{-4}$ $mm^3$ et $5.10^{-3}$ $mm^3$.

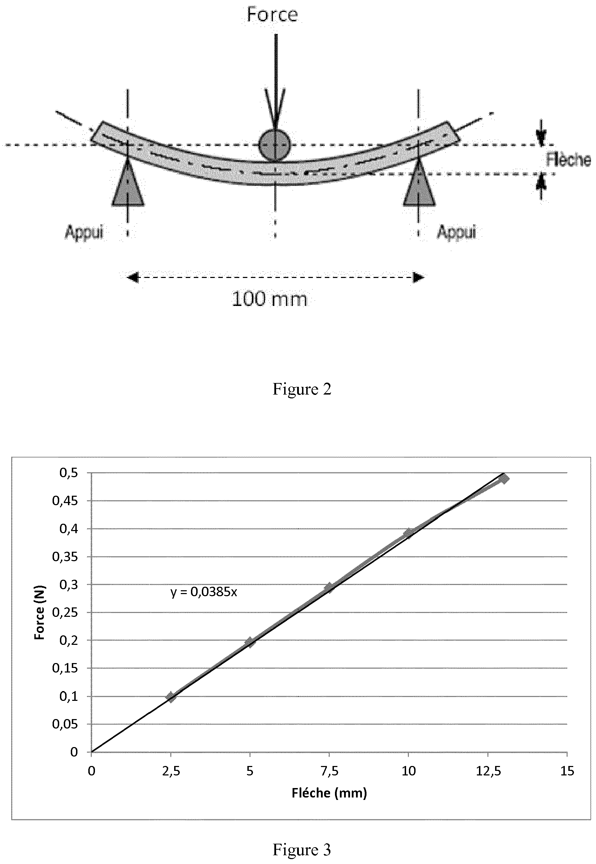

Fig. 2 : schéma représentant le dispositif de l'expérience de flexion en trois points, permettant de mesurer le module de flexibilité d'un matériau. Le panneau est posé sur deux appuis (représentés par des triangles) situés à 7,5 cm du bord, et distants de 100 cm, et un effort vertical de haut en bas est appliqué en positionnant différentes masses (représentées par une sphère sur le schéma) posées au centre du matériau. On mesure la distance de déformation du centre du matériau.

Fig. 3 : Courbe représentant la force (mesurée en Newton (N), axe des ordonnées) en fonction de la flèche (mesurée en mm, axe des abscisses). Cette courbe représente les résultats du test de l'exemple 3. Une régression linéaire permet de déterminer une pente de 0.0385 N/mm, et une ordonnée à l'origine de 0.

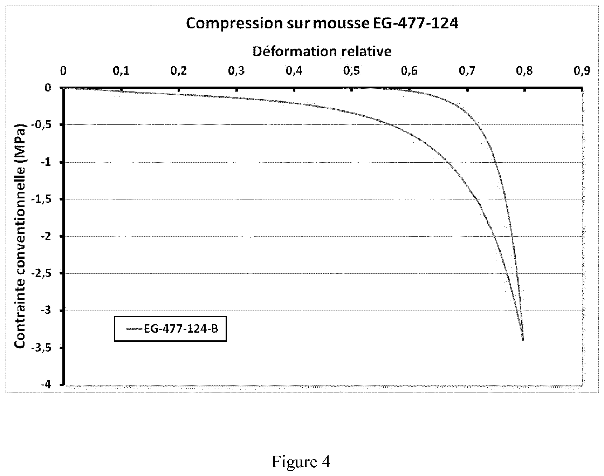

Fig. 4 : Représentation des résultats de l'essai de l'exemple 4. La courbe obtenue représente la contrainte conventionnelle (exprimée en MPa) en fonction de la déformation relative $\varepsilon = \dfrac{e - e_0}{e_0}$, avec $e_0$ l'épaisseur de l'échantillon avant l'essai, $\varepsilon$ sans unité).

EXEMPLES

Exemple 1 : Préparation d'un panneau composite d'épaisseur 10 mm selon l'invention 1) Préparation d'un alcogel de silice composite

Un sol de silice, obtenu par hydrolyse d'alkoxysilane en présence d'acide chlorhydrique puis ajout d'ammoniaque, a été versé avant gélification sur une nappe de mousse de mélamine de dimension 250x290x10 $mm^3$ (mousse BASOTECT® commercialisée par BASF) dans une chambre fermée de dimensions 300x300x70 $mm^3$. Après gélification, l'alcogel renforcé a été vieilli pendant 24h à 50°C dans l'éthanol. L'acide chlorhydrique et l'hexaméthyldisiloxane (agent hydrophobant) ont ensuite été introduits dans la chambre de manière à recouvrir totalement l'alcogel composite. Le milieu réactionnel a été chauffé et maintenu à 50°C pendant 48h. Le milieu réactionnel a été séparé de l'alcogel de silice hydrophobe composite par percolation.

2) Obtention d'un matériau composite de mousse mélamine et d'aérogel de silice hydrophobe

L'alcogel condensé renforcé par la nappe de mousse mélamine a été séché en étuve ventilée à 160°C pendant 2 heures. Le panneau d'aérogel obtenu mesure 10 mm d'épaisseur et présente une conductivité thermique de 12.6 mW/m.K, mesurée selon la méthode de la plaque chaude gardée de la norme NF EN 12667 à 20°C et pression atmosphérique.

3) Mesure du diamètre des pores et de la macroporosité

Le matériau composite obtenu après séchage est ensuite analysé par tomographie X 3D. Les acquisitions ont été réalisées avec le modèle de machine DeskTom muni d'un générateur de 130 kV. La résolution obtenue sur l'échantillon est de 24,5$\mu$m, soit une distance foyer/échantillon d'environ 12cm. Le logiciel utilisé pour l'acquisition et la reconstruction des données est un logiciel développé par RX Solutions: X-Act. Pour les post-traitements (visualisation et analyse de porosité), le logiciel VG Studio Max version 2.2 a été utilisé. L'analyse montre que le volume des pores ($V_{moyen}$) est dans la plus grande majorité compris entre $1.10^{-4}$ $mm^3$ et $5.10^{-3}$ $mm^3$ (voir figure 1).

En considérant que la forme des pores est assimilable à une sphère parfaite, on applique la formule mathématique suivant : $d_{moyen} = \sqrt[3]{\left(\dfrac{6 \times V_{moyen}}{\pi}\right)}$. Le

diamètre des pores ainsi calculé est compris entre 57 et 212 µm.

La macroporosité de l'échantillon est calculée comme étant le rapport de l'intégrale des volumes de pores identifiés sur le volume de l'échantillon. Selon cette méthode de calcul, le matériau composite possède donc une macroporosité de 1,44%.

Exemple 2 : Préparation d'un panneau composite d'épaisseur 30 mm selon l'invention

1) Préparation d'un alcogel de silice composite

Un sol de silice, obtenu par hydrolyse d'alkoxysilane en présence d'acide chlorhydrique puis ajout d'ammoniaque, a été versé avant gélification sur une nappe de mousse de mélamine de dimension 250x290x30 mm$^3$ dans une chambre fermée de dimensions 300x300x70 mm$^3$. Le solvant est ici l'éthanol. Après gélification, l'alcogel renforcé a été vieilli pendant 24h au reflux de l'éthanol. L'acide chlorhydrique et l'hexaméthyldisiloxane (agent hydrophobant) ont ensuite été introduits dans la chambre de manière à recouvrir totalement l'alcogel composite. Le milieu réactionnel a été chauffé et maintenu au reflux de l'éthanol pendant 48h. Le milieu réactionnel a été séparé de l'alcogel de silice hydrophobe par percolation.

2) Obtention d'un panneau de mousse mélamine et de aérogel de silice hydrophobe composite

L'alcogel de silice hydrophobe renforcé a été placé dans un sécheur micro-onde et séché pendant 50 min à 50°C.
Le panneau de aérogel obtenu mesurait 30 mm d'épaisseur et présentait une conductivité thermique de 14,2 mW/m.K, mesurée selon la méthode de la plaque chaude gardée de la norme NF EN 12667 à 20°C et pression atmosphérique.

Exemple 3 : mesure de flexibilité du matériau composite selon l'exemple 1

Un essai de flexion en 3 points a été réalisé comme indiqué sur la figure 2 sur un échantillon de dimension 25x10x250 mm fabriqué selon le protocole présenté à l'exemple 1. Le matériau composite repose sur deux appuis, séparés de 100 mm.
Différentes forces sont appliquées sur l'échantillon en son centre. Le déplacement (flèche) de celui-ci a été mesuré.

Résultats :

Les résultats obtenus sont représentés sur la figure 3. On calcule une raideur ou rigidité à la flexion K= 0.0385 N/mm, qui correspond à la pente de la courbe Force-Flèche.

Exemple 4 : mesure de contrainte maximale en compression d'un matériau composite selon l'exemple 1

L'essai de compression uniaxiale a été réalisé sur une machine d'essai Zwick électromécanique 100 kN, munie d'un capteur d'effort externe de capacité 5kN. Les dimensions des échantillons sont de 30x30x10 mm$^3$. La vitesse de déplacement de la traverse est de 0,3 mm/min lors de la charge et de 1 mm/min lors de la décharge.
Les résultats de cet essai sont représentés sur la figure 4. Un module de compression a été mesuré à 0.43 MPa et la contrainte maximale est de 3.3 MPa pour une déformation relative de 80%.

Exemple 5: Préparation d'un panneau de mousse composite isolant d'épaisseur 10 mm selon l'invention

1) Préparation d'un hydrogel de silice composite

Un sol de silice, obtenu par mélange d'une solution aqueuse de silicate de soude et d'une solution d'acide chlorhydrique, est versé avant gélification sur une nappe de mousse de mélamine de dimension 250x290x10 mm$^3$ dans une chambre fermée de dimensions 300x300x70 mm$^3$. Après gélification, l'hydrogel renforcé est vieilli pendant 24h à 50°C dans l'eau. Un échange de solvant est réalisé avec de l'acétone (pendant 48h à 50°C en renouvelant l'acétone 2 fois). L'acide chlorhydrique et l'hexaméthyldisiloxane (agent hydrophobant) sont ensuite introduits dans la chambre de manière à recouvrir totalement le lyogel composite. Le milieu réactionnel est chauffé et maintenu à 50°C pendant 48h. Le milieu réactionnel est séparé du lyogel de silice hydrophobe par percolation.

2) Obtention d'un panneau de mousse mélamine et de xérogel de silice hydrophobe composite

Le lyogel condensé renforcé par la nappe de mousse mélamine est séché en étuve ventilée à 160°C pendant 2 heures. Le panneau de xérogel obtenu mesurait 9 mm d'épaisseur et présente une conductivité thermique de 14.5 mW/m.K, mesurée selon la méthode de la plaque chaude gardée de la norme NF EN 12667 à 20°C et pression atmosphérique.
On notera que les panneaux selon les exemples 1, 2, 3 et 6 comprennent tous entre 92% et 98% en poids d'aérogel par rapport au poids du matériau composite. Dans tous les exemples qui précèdent, l'ammoniaque est utilisé comme catalyseur de gélification (étape b), en une quantité comprise entre 2 et 2.5% en poids par rapport au poids total des constituants de départ du sol.

## Revendications

**1.** Matériau composite monolithique comprenant un aérogel inorganique renforcé par une mousse de mélamine à cellules ouvertes préformée, ledit matériau présentant une conductivité thermique λ comprise entre 10 et 20 mW/m·K, mesurée selon la méthode de la plaque chaude gardée de la norme NF EN 12667 à 20°C et à pression atmosphérique, **caractérisé en ce que**

le pourcentage du volume occupé par des macropores, les macropores étant des pores présentant un diamètre supérieur à 10 μm, par rapport au volume occupé par le matériau dans sa totalité est inférieure à 5%, mesuré par tomographie aux rayons X et en trois dimensions,
le matériau ne comprend pas de liant, et
**caractérisé en ce que** le matériau est obtenu par un procédé comprenant les étapes successives suivantes :

a) coulage d'un sol inorganique dans un réacteur, dans lequel a été placé au préalable la mousse de mélamine à cellules ouvertes préformée, ledit sol comprenant entre 6 et 15% en poids, de matériau inorganique par rapport au poids total du sol inorganique,
b) gélification du sol en un lyogel,
c) séchage du lyogel.

**2.** Matériau selon la revendication 1, **caractérisé en ce que** les macropores dont le diamètre est compris entre 50 et 250 microns représentent plus de 80 % du nombre total de macropores dudit matériau.

**3.** Matériau selon la revendication 1 ou 2, **caractérisé en ce qu'**il présente une épaisseur comprise entre 2 et 50 mm.

**4.** Matériau selon l'une quelconque des revendications 1 à 3, **caractérisé en ce qu'**il présente une densité comprise entre 70 kg·m$^{-3}$ et 150 kg·m$^{-3}$

**5.** Matériau selon l'une quelconque des revendications 1 à 4, **caractérisé en ce que** la mousse de mélamine est une mousse de mélamine formaldéhyde possédant une épaisseur comprise entre 2 et 50 mm, une porosité comprise entre 95% et 99.5%, une densité comprise entre 8.5 et 11.5 kg·m$^{-3}$ et une conductivité thermique comprise entre 35 et 40 mW/m·K mesurée selon la méthode de la plaque chaude gardée de la norme NF EN 12667 à 20°C et à pression atmosphérique.

**6.** Matériau selon l'une quelconque des revendications 1 à 5, **caractérisé en ce que** l'aérogel inorganique est choisi parmi les aérogels de silice, d'oxyde de titane, d'oxyde de manganèse, d'oxyde de calcium, de carbonate de calcium, d'oxyde de zirconium, ou leurs mélanges.

**7.** Matériau selon l'une quelconque des revendications 1 à 6, **caractérisé en ce qu'**il possède une quantité résiduelle de solvant en poids du matériau composite inférieure ou égale à 3% selon la norme EN/ISO 3251.

**8.** Matériau selon l'une quelconque des revendications 1 à 7, **caractérisé en ce que** l'aérogel comprend en outre un opacifiant.

**9.** Panneau multicouche comprenant au moins une couche essentiellement constituée d'un matériau composite monolithique selon l'une quelconque des revendications 1 à 8.

**10.** Utilisation d'un matériau composite selon l'une quelconque des revendications 1 à 8 ou d'un panneau multicouche selon la revendication 9 en tant qu'isolant thermique.

**11.** Utilisation d'un matériau composite selon l'une quelconque des revendications 1 à 8 ou d'un panneau multicouche selon la revendication 9 en tant qu'isolant acoustique.

## Patentansprüche

**1.** Monolithisches Verbundmaterial, das ein anorganisches Aerogel, welches durch einen vorgeformten Melaminschaum mit offenen Zellen verstärkt ist, umfasst, wobei das Material eine Wärmeleitfähigkeit λ von zwischen 10 und 20 mW/m·K, gemessen nach der Methode mit geschützter Heizplatte gemäß Norm NF EN 12667 bei 20°C und Atmosphärendruck, hat, **dadurch gekennzeichnet, dass**
der prozentuale Anteil des Volumens, das durch Makroporen besetzt ist, wobei Makroporen Poren sind, die einen Durchmesser von größer als 10 μm haben, bezogen auf das Volumen, das durch das Material in seiner Gesamtheit besetzt ist, unter 5% liegt, gemessen durch Röntgentomographie und in drei Dimensionen,
das Material kein Bindemittel umfasst und
**dadurch gekennzeichnet, dass** das Material durch ein Verfahren erhalten wird, das die folgenden aufeinanderfolgenden Stufen umfasst:

a) Gießen eines anorganischen Sols in einen Reaktor, in den vorher der vorgeformte Melaminschaum mit offenen Zellen gegeben worden war, wobei das Sol zwischen 6 und 15 Gew.-% anorganisches Material, bezogen auf das Gesamtgewicht des anorganischen Sols, umfasst,

b) Gelierung des Sols zu einem Lyogel,

c) Trocknung des Lyogels.

**2.** Material gemäß Anspruch 1, **dadurch gekennzeichnet, dass** die Makroporen, deren Durchmesser zwischen 50 und 250 Mikrometer liegt, mehr als 80% der Gesamtzahl der Makroporen des Materials darstellen.

**3.** Material gemäß Anspruch 1 oder 2, **dadurch gekennzeichnet, dass** es eine Dicke von zwischen 2 und 50 mm aufweist.

**4.** Material gemäß einem der Ansprüche 1 bis 3, **dadurch gekennzeichnet, dass** es eine Dichte aufweist, die zwischen 70 kg·m$^{-3}$ und 150 kg·m$^{-3}$ liegt.

**5.** Material gemäß einem der Ansprüche 1 bis 4, **dadurch gekennzeichnet, dass** der Melaminschaum ein Melamin-Formaldehyd-Schaum ist, der eine Dicke von zwischen 2 und 50 mm, eine Porosität von zwischen 95% und 99,5%, eine Dichte von zwischen 8,5 und 11,5 kg·m$^{-3}$ und eine Wärmeleitfähigkeit von zwischen 35 und 40 mW/m·K, gemessen nach der Methode mit geschützter Heizplatte gemäß Norm NF EN 12667 bei 20°C und Atmosphärendruck, aufweist.

**6.** Material gemäß einem der Ansprüche 1 bis 5, **dadurch gekennzeichnet, dass** das anorganische Aerogel aus Silica-Aerogel, Titanoxid-Aerogel, Manganoxid-Aerogel, Calciumoxid-Aerogel, Calciumcarbonat-Aerogel, Zirkoniumoxid-Aerogel und ihren Gemischen ausgewählt ist.

**7.** Material gemäß einem der Ansprüche 1 bis 6, **dadurch gekennzeichnet, dass** es eine Restmenge an Lösungsmittel, bezogen auf das Gewicht des Verbundmaterials, von unter oder gleich 3% gemäß der Norm EN/ISO 3251 besitzt.

**8.** Material gemäß einem der Ansprüche 1 bis 7, **dadurch gekennzeichnet, dass** das Aerogel außerdem ein Trübungsmittel umfasst.

**9.** Mehrschichtige Platte, die wenigstens eine Schicht umfasst, die im Wesentlichen aus einem monolithischen Verbundmaterial gemäß einem der Ansprüche 1 bis 8 gebildet wird.

**10.** Verwendung eines Verbundmaterials gemäß einem der Ansprüche 1 bis 8 oder einer mehrschichtigen Platte gemäß Anspruch 9 als Wärmedämmstoff.

**11.** Verwendung eines Verbundmaterials gemäß einem der Ansprüche 1 bis 8 oder einer mehrschichtigen Platte gemäß Anspruch 9 als Schalldämmung.

**Claims**

**1.** A monolithic composite material comprising an inorganic aerogel reinforced by a preformed open-cell melamine foam, said material having a thermal conductivity λ between 10 and 20 mW/m·K, measured according to the method of the guarded hot plate of the NF EN 12667 at 20°C and atmospheric pressure, **characterized in that**

the percentage of a volume occupied by macropores, macropores being pores with a diameter greater than 10 $\mu$m, in a volume occupied by the material in its entirety is less than 5%, as measured using X-ray tomography and in three dimensions,

the material does not contain any binder, and **characterized in that** the material is obtained by a process comprising the following successive steps:

a) casting an inorganic sol in a reactor in which was previously placed a preformed open-cell melamine foam, said sol comprising between 6 and 15% by weight of inorganic material based on the total weight of the inorganic sol,

b) gelation of the sol into a lyogel,

c) drying the lyogel.

**2.** Material according to claim 1, **characterized in that** the macropores whose diameter is between 50 and 250 microns represent more than 80% of total number of macropores of said material.

**3.** Material according to claim 1 or 2, **characterized in that** it has a thickness between 2 and 50 mm.

**4.** Material according to any one of claims 1 to 3, **characterized in that** it has a density between 70 kg·m$^{-3}$ and 150 kg·m$^{-3}$.

**5.** Material according to any one of claims 1 to 4, **characterized in that** the melamine foam is a melamine-formaldehyde foam having a thickness between 2 and 50 mm, a porosity between 95% and 99.5%, a density between 8.5 and 11.5 kg·m$^{-3}$, and a thermal conductivity between 35 and 40 mW/m·K measured by means of the method of the guarded hot plate of NF EN 12667 at 20°C and atmospheric pressure.

**6.** Material according to any one of claims 1 to 5, **characterized in that** the inorganic aerogel is selected from silica aerogel, titanium oxide aerogel, manganese oxide aerogel, calcium oxide aerogel, calcium carbonate aerogel, zirconium oxide aerogel, or mixtures thereof.

7. Material according to any one of claims 1 to 6, **characterized in that** the material has a quantity of residual solvent by weight of the composite material of less than or equal to 3% according to EN/ISO 3251.

8. Material according to any one of claims 1 to 7, **characterized in that** the aerogel further comprises an opacifier.

9. Multilayer panel comprising at least one layer consisting essentially of a monolithic composite material according to any one of claims 1 to 8.

10. Use of a composite material according to any one of claims 1 to 8 or of a multilayer panel according to claim 9 as thermal insulation.

11. Use of a composite material according to any one of claims 1 to 8 or of a multilayer panel according to claim 9 as acoustic insulation.

Figure 1

Figure 2

Figure 3

Figure 4

**RÉFÉRENCES CITÉES DANS LA DESCRIPTION**

**Documents brevets cités dans la description**

- US 20120142802 A
- EP 1808454 A
- EP 0340707 A
- DE 19533564
- US 20120064287 A
- US 20070259979 A
- US 20090029147 A
- US 6040375 A
- US 6887563 B
- WO 2013053951 A